(19)

Europäisches Patentamt

European Patent Office

Office européen des brevets

(11) **EP 4 636 728 A1**

(12) **EUROPEAN PATENT APPLICATION**

(43) Date of publication:
22.10.2025 Bulletin 2025/43

(21) Application number: 24207089.4

(22) Date of filing: 17.10.2024

(51) International Patent Classification (IPC):
*G08G 1/00* (2006.01)

(52) Cooperative Patent Classification (CPC):
G08G 1/166; B60W 30/095; B60W 60/0011;
B60W 60/0027; B60W 60/00274; B60W 60/00276;
G08G 1/163; B60W 2554/4045

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.04.2024 EP 24171066

(71) Applicant: Honda Research Institute Europe
GmbH
63073 Offenbach/Main (DE)

(72) Inventors:
• Amann, Markus
  63073 Offenbach am Main (DE)
• Probst, Malte
  63073 Offenbach am Main (DE)
• Weisswange, Thomas
  63073 Offenbach/Main (DE)
• Wenzel, Raphael
  63073 Offenbach am Main (DE)

(74) Representative: Beder, Jens
Mitscherlich PartmbB
Patent- und Rechtsanwälte
Karlstraße 7
80333 München (DE)

(54) **COMMUNICATION FOR ASSISTING INTERACTION OF AN AUTOMATED VEHICLE WITH OTHER ROAD USERS**

(57) A method and system for assisting an ego-agent in operating in a dynamic environment in which at least one other agent is. By applying a behavior-planning algorithm based on acquired sensor information and agent information, ego-behaviors of the ego-agent are planned. Furthermore, behaviors of the at least one other agent are predicted. The method determines an interaction zone in the environment of the ego-agent and at least one other agent based on the planned ego-behaviors and the predicted behaviors of the at least one other agent. A behavior planner selects a combination of one planned ego-behavior and one corresponding predicted behavior based on a predicted interaction of the ego-agent with the at least one other agent in the interaction zone, and the ego-agent is operated based on the selected ego-behavior. The method further comprises deciding whether to output a signal to the at least one other agent based on fulfilling at least one set of criteria and based on the selected combination of one planned ego-behavior and one corresponding predicted behavior, generating the signal including information on the selected combination behavior of the ego-agent and the predicted behavior of the at least one other agent, and, in case of deciding to output the generated signal, outputting the signal via an external human machine interface to the at least one other agent.

FIG. 3

**Description**

The invention regards automated vehicles and assistance systems of vehicles. In particular, the disclosure concerns methods and systems for controlling an external human-machine interface of an automated vehicle for a communication with pedestrians in cooperatively handling a traffic situation.

Situations in which cooperation between traffic participants is necessary to resolve situations occur regularly in a road traffic environment. The road traffic environment is a dynamic environment, which includes a predominantly static traffic infrastructure and a plurality of moving agents, including, but not limited motor vehicles, cyclists, and pedestrians. The traffic infrastructure may include roads for vehicles and areas intended for pedestrians. However, pedestrians might intend to traverse roads at locations where no specific infrastructure such as traffic lights provide support and clear regulations concerning precedence. The right of way at an intersection of small roads may not always appear clear to every vehicle and therefore require negotiation between traffic participants for finding a resolution in a specific scenario. Successful cooperation between the traffic participants provides a comfortable, safe, and efficient interaction in the traffic environment.

An example scenario for situations in the traffic environment, which require cooperation and benefit from successful interaction, includes a pedestrian that intends to cross a road on which vehicles are driving. Using external human machine interfaces (eHMI), e.g., a frontal brake light, screen or LED array arranged on a vehicle may improve interactions between pedestrians and vehicles, due to reducing the time the pedestrian needs to detect a braking maneuver of the vehicle. The external human machine interface offers potential to improve the decision making process of the pedestrian intending to traverse a road with moving traffic on the road. Currently, the decision-making in controlling the information presentation of the external human machine interface is widely neglected, in particular in comparison with other aspects of external human machine interfaces design.

Therefore, control of external human machine interfaces and integration into assistance systems for vehicles poses challenges and potential for improvement.

The method, the program, the recording medium and the system according to the corresponding independent claims provide advantageous solutions regarding these issues. The dependent claims define further advantageous embodiments.

It is to be noted that pedestrians may be used in the following description and explanation of the invention as a particularly relevant example of other road users (other agents). However, the invention is not limited to pedestrians.

The method for assisting an ego-agent in operating in a dynamic environment, wherein at least one other agent is in the dynamic environment, in a first aspect of the invention comprises acquiring sensor information on the dynamic environment, and agent information on the ego-agent. The method determines, for the at least one other agent, if there are at least two different potential future behaviors of the at least one other agent with respect to an interaction of the at least one other agent with the ego-agent and predicts future trajectories of the at least one other agent (2) including at least a first behavior of the at least one other agent for a first interaction behavior with the ego-agent and a second behavior of the at least one other agent for a second interaction behavior of the at least one other agent with the ego agent. The method plans ego-behaviors of the ego-agent including at least a first ego-behavior and a second ego-behavior by applying a behavior planning algorithm based on the acquired sensor information and agent information. The method selects a combination of one planned ego-behavior and one corresponding predicted behavior based on a predicted interaction of the ego-agent with the at least one other agent. The method then controls operation of the ego-agent based on the selected ego-behavior. The method is characterized in further comprising a step of deciding whether to output a signal to the at least one other agent based on fulfilling at least one set of criteria and based on the selected combination of one planned ego-behavior and one corresponding predicted behavior, and generating the signal including information on the selected combination of one planned behavior of the ego-agent and predicted behavior of the at least one other agent in case of deciding to output the generated signal. The method outputs the generated signal to the at least one other agent via an external human machine interface.

Agent information is information on the state of the ego-agent, in a particular on dynamics of the ego-agent, including, e.g., information on position, orientation, moving direction, velocity, acceleration or deceleration of the ego-agent.

The method decides whether to communicate a message to the other agent(s) based on the planned behaviors, predicted behaviors, and the selected combination of one planned ego-behavior and the associated predicted behavior for execution by the ego-agent, and generates the message, e.g., the message content, based on the selected combination of one planned ego-behavior and the associated predicted behavior. By outputting the message via the external human machine interface to the other agent(s), the assistance system makes the reasoning behind the ego-agent's decision making transparent and understandable for the other agent(s).

In the method according to an embodiment, the generated signal further includes information on an uncertainty with the selected combination of one planned behavior of the ego-agent and one predicted behavior of the other agent.

Therefore, the assistance system reduces the uncertainty for the other agent(s), how the ego-agent intends to proceed in the current situation in the environment. Even more, by communicating the generated message to the other agent(s), the assistance system also increases the certainty associated with the predicted behavior of the other agent(s) in the scene interpretation and the behavior planning process of the assistance system of the ego-agent itself.

The method according to an embodiment determining if the at least one other agent has at least two behavior options for interacting with the ego-agent includes determining an interaction zone in the environment of the ego-agent and at least one other agent based on the possible paths for the ego-agent and the possible paths for the at least one other agent.

The method according to an embodiment includes selecting the combination of the planned behavior of the ego-agent and the predicted behavior of the at least one other agent by evaluating a joint cost function that regards cost of the ego-agent and the least one other agent.

Evaluating a joint cost function is a specifically advantageous embodiment. The selection of the combination of a planned behavior for the ego-agent and an associated behavior of the other agent(s) from a plurality of predicted and planned behavior combinations may be performed in different ways. Evaluating the costs of both agents in a joint cost function that considers the concerns of both agents, and selecting the best combination of predicted and planned behavior with respect to these joint cost function ensure a resolution of the situation for the mutual benefit of both agents.

The method according to an embodiment includes generating, by a behavior planner, information on the predicted interaction and the selected combination of the one planned behavior and the associated predicted behavior and providing the generated information to a communication system.

The method according to an embodiment includes generating, by a behavior planner, semantic information on the predicted interaction based on the selected combination of the one planned behavior and the associated behavior and providing the generated semantic information to a communication system. The semantic information may comprise information on at least one of: passing order of the agents through the interaction zone, velocity, acceleration and steering trajectories of the selected behaviors.

According to an embodiment of the method, fulfilling the at least one set of criteria requires fulfilling a first set of criteria that includes at least one combination of one ego-behavior with one predicted behavior resulting in the at least one other agent passing the interaction zone before the ego-agent passes the interaction zone (first criterion), and executing the selected ego-behavior includes the at least one other agent passing the interaction zone before the ego-agent passes the interaction zone (second criterion), at least one combination of one ego-behavior with one predicted behavior results in the at least one other agent passing the interaction zone after the ego-agent passes the interaction zone (third criterion); and a difference between an ego-behavior of the ego-agent included in an alternative combination of one ego-behavior with one predicted behavior different than the selected combination and the one ego-behavior of the selected combination exceeding a first threshold (fourth criterion).

Determining whether to output a signal to the other agents(s) based on fulfilling or not fulfilling the first set of criteria has the effect of the ego-agent deciding for either of the two options of passing the interaction zone before the pedestrian or yielding to the other agent(s) so that the other agent(s) may pass first. Only if the ego-behavior options are sufficiently different from each other, the communication of a suitable message in the output signal to the other agent(s) will have an impact on the actual ego-behavior. Evaluating the first and second criterion has the effect of determining that the ego-agent is indeed willing to let the other agent(s) cross first. The first set of criteria further covers the uncertainty about the resolution of the interaction between the ego-agent and the other agent(s). Furthermore, it ensures that the option of the ego-agent passing interaction zone before the other agent(s) is a realistic option within the scope of possible resolutions of the situation in the environment.

According to an embodiment, fulfilling the at least one set of criteria includes requires fulfilling a second set of criteria that includes at least one combination of one ego-behavior with one predicted behavior resulting in the ego-agent passing the interaction zone before the at least one other agent passes the shared traffic space (first criterion), and executing the selected behavior including the ego-agent passing the interaction zone before the at least one other agent passes the interaction zone (second criterion), and at least one combination of one planned ego-behavior of the ego-vehicle and on associated predicted behavior of the pedestrian exists for which the pedestrian passes the interaction zone before the ego-vehicle passes the interaction zone (third criterion), and a difference between an ego-behavior included in an alternative combination of one ego-behavior with one predicted behavior different than the selected combination and the one ego-behavior of the selected combination exceeding a second threshold (fourth criterion).

The fourth criterion ensures that the ego-agent needs to decide for either of the two options of either the ego-agent 1 passing the interaction zone before the other agent or letting the other agent 2 pass before the ego-agent passes the interaction zone. In case the ego-behavior options are sufficiently different from each other, the communication of a message to the ego-agent has an impact on the actual ego-behavior.

Evaluating whether the second set of criteria is fulfilled enables to cause communicating the signal in case of the ego-agent planning an ego-behavior that includes driving on because the ego-agent concludes in the planning process that the other agent(s) will wait, and that the corresponding ego-behavior represents the best resolution of the perceived situation. The second set of criteria has the effect of covering the uncertainty about the resolution of the interaction and ensures that the option of the other agent(s) passing the interaction zone before the ego-agent is a realistic option within the range of predicted resolutions of the perceived situation in the environment.

The method according to another embodiment includes determining the difference based on an acceleration of the ego-agent.

For the planned ego-behavior including a velocity profile, determining an acceleration is computationally efficient and may be performed without requiring significant processing resources during each processing cycle of the behavior-planning process.

According to an embodiment, the ego-agent is an automated vehicle and the at least one other agent includes at least one of a pedestrian, a cyclist, and a motorcyclist, and a driver in a motor vehicle (human-operated vehicle).

The assistance system enables to implement an advantageous support for interactions of autonomously operating vehicles with other traffic participants that base on human decision-making in road traffic scenarios that require interaction and negotiation for finding and implementing resolutions of the traffic scenarios.

In an embodiment of the method, the generated signal is at least one of an image, a symbol, a light pattern, a text message, an animated image, a sound pattern, and a voice message.

The method according to an embodiment comprises generating, if the system determines more than one other agent, signals for each of them and outputting the signals by one of a plurality of human machine interfaces determined to be visible to the respective other agent, or outputting the signals at positions on a single human machine interface in a way that is directed towards the corresponding other agent.

A second aspect of the disclosure concerns a computer program that comprises machine-readable instructions executable by a digital processing apparatus, which, when the digital processing apparatus executes the computer program, cause the digital processing apparatus to perform the method according to the first aspect.

A third aspect of the disclosure concerns a non-transitory computer-readable storage medium embodying a program of machine-readable instructions executable by a digital processing apparatus, which when the digital processing apparatus executes the program, cause the digital processing apparatus to perform the method according to the first aspect.

A fourth aspect of the disclosure concerns a communication system for an assistance system for assisting an ego-agent in operating in a dynamic environment in which at least one other agent is present. The communication system is configured to perform the method steps explained above.

In particular, the system according to the fourth aspect comprises at least one sensor interface configured to acquire sensor information on the dynamic environment of the ego-agent and agent information on the ego-agent; a behavior planner configured to plan ego-behaviors of the ego-agent including at least a first ego-behavior and a second ego-behavior by applying a behavior planning algorithm based on the acquired sensor information and agent information, and the behavior planner is further configured to predict behaviors of the at least one other agent including at least a first behavior and a second behavior of the at least one other agent. The system is configured to determine, for the at least one other agent, if there are at least two different potential future behaviors of the at least one other agent with respect to an interaction of the at least one other agent with the ego-agent. The system is further configured to predict future trajectories of the at least one other agent including at least a first behavior of the at least one other agent for a first interaction behavior with the ego-agent and a second behavior of the at least one other agent for a second interaction behavior of the at least one other agent with the ego agent, and to select a combination of one planned ego-behavior and one corresponding predicted behavior based on a predicted interaction of the ego-agent with the at least one other agent in the interaction zone. The system comprises further a controller configured to control operation of the ego-agent based on the selected ego-behavior, a communication system configured to decide whether to output a signal to the at least one other agent based on fulfilling at least one set of criteria and based on the selected combination of one planned ego-behavior and one corresponding predicted behavior. The communication system is further configured to generate the signal including information on the selected combination of one planned ego-behavior and the predicted behavior, and to control outputting, via an external human machine interface, the generated signal to the at least one other agent.

The aspects and implementation of the present disclosure will be explained in the following description of specific embodiments in relation to the enclosed drawings, in which:

Fig. 1 shows a flowchart that illustrates an assistance method for assisting operation of an ego-agent according to an embodiment;

Fig. 2 illustrates a base traffic scenario involving a vehicle and a pedestrian useful for discussing embodiments;

Fig. 3 illustrates the processing sequence in an assistance system in an implementation of an embodiment of the assistance method;

Fig. 4 illustrates examples of behaviors and interactions in the road traffic scenario of fig. 2for illustrating an embodiment;

Fig. 5 illustrates examples of behaviors and interactions in the road traffic scenario of fig. 2 for illustrating an embodiment;

Fig. 6A and Fig. 6B provide flowcharts illustrating processing examples in the communication system according to an embodiment; and

Fig. 7 shows a simplified example for structural elements of an automated vehicle suitable for implementing an embodiment.

The description of figures uses same references numerals for same or corresponding elements in different figures. The description of figures dispenses with a detailed discussion of same reference numerals in different figures whenever considered possible without adversely affecting comprehensibility.

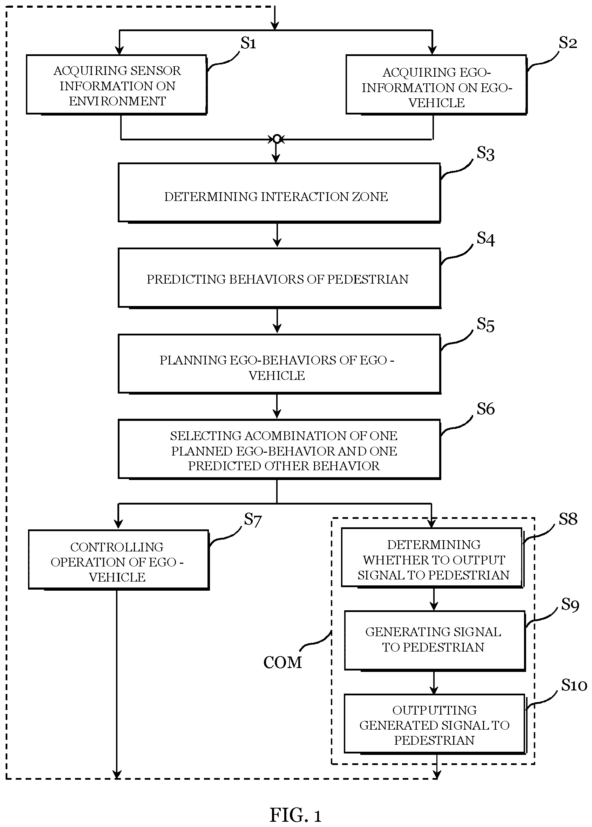

Fig. 1 shows a flowchart that illustrates an assistance method for assisting operation of an ego-agent according to an embodiment.

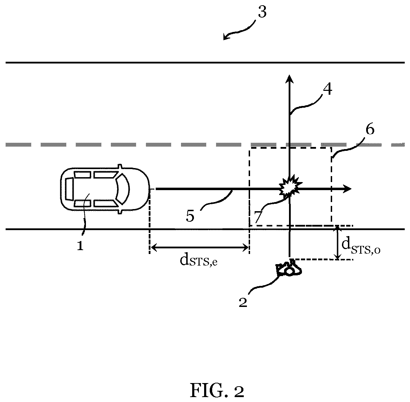

The method assists an ego-agent in operating in a dynamic environment. In the environment of the ego-agent is at least one other agent. For sake of conciseness, the description of a particular embodiment assumes one single other agent being present in the environment of the ego-agent. In the following discussion of the embodiment, the ego-agent is a road vehicle (ego-vehicle 1) cruising along a road 3 in a road traffic scenario. The at least one other agent is a pedestrian 2. Fig. 2 illustrates the road traffic scenario with a pedestrian 2 intending to cross the road 3 as a specific application of the assistance method that includes processing steps according to fig. 1.

The ego vehicle 1 is an automated vehicle (autonomous vehicle), which comprises an assistance system 10 for supporting the autonomous control in operating the ego-vehicle 1.

The method starts with a step S1 of acquiring sensor information on the environment (dynamic environment).

The environment may correspond the space that the sensors 25 of the ego-vehicle 1 monitor and which the assistance system 10 perceives and interprets based on the acquired sensor information. The environment is a dynamic environment, which means that elements of the environment change over time. Elements of the dynamic environment include other agents, in particular the pedestrian 2 that itself may move or change orientation. Due to a movement of the ego-vehicle 1, elements interpreted as static elements such as curbstones or crossing roads change their position relative to the moving ego-vehicle 1.

The assistance system 10 may acquire the sensor information from a plurality of sensors 25 that monitor the environment of the ego-vehicle 1. The acquired sensor information includes in particular information on the position and the dynamics, e.g., moving direction and velocity, of the pedestrian 2, and any other agent in the environment of the ego vehicle 1.

In step S2, the assistance system 10 acquires ego-information on the ego-vehicle 1.

The ego-information includes in particular information on the dynamics e.g., moving direction and velocity, of the ego-vehicle 1. The assistance system 10 may generate a representation of the current scenario in the environment of the ego-vehicle 1 and predict a further evolvement of the current scene based on the acquired sensor information and ego-information. The predicted evolvement of the current scene may include a plurality of behaviors of any agent that the assistance system 10 detects in the environment. A behavior is considered to include at least a velocity profile over a time horizon (prediction time horizon) for the agent. It is to be noted that the velocity profile is used in a preferred embodiment, but a position or acceleration profile might be used instead or additionally.

In step S3, the assistance system 10 determines a shared traffic space 6 (STS 6, also: interaction zone 6) in the environment of the ego-vehicle 1 and the pedestrian 2In the shared traffic space, combinations actual behaviors of the ego-vehicle 1 and the pedestrian 2 may result in collision events involving the ego-vehicle 1 and the pedestrian 2 when executed in combination. The shared traffic space may be determined by determining such potential collision events and defining parts of the space in the environment around locations of such potential collision events as a shared traffic space. In the shared traffic space, only one of the ego-vehicle 1 and the pedestrian 2 may be present at any time within the prediction time horizon.

In step S4, the method predicts behaviors of the pedestrian 2 including at least a first behavior and a second behavior of the pedestrian 2, and the method may further determine an uncertainty associated with each predicted behavior of the pedestrian 2.

The predicted behaviors each include at least a velocity profile for the pedestrian 2.

The method proceeds with step S5, in which the assistance system 10 plans ego-behaviors of the ego-vehicle 1 including at least a first ego-behavior and a second ego-behavior by applying a behavior-planning algorithm based on the acquired sensor information and the acquired agent information.

The ego-behaviors each include at least an ego-velocity profile for the ego-vehicle 1.

The method proceeds in step S6 with selecting a combination of one planned ego-behavior and one corresponding predicted behavior of the pedestrian. The selected combination ensures that only the ego-vehicle 1 or the pedestrian 2 is in the shared traffic space at any given time in the prediction time horizon. The selected combination includes one ego-behavior of the ego-vehicle 1 and one corresponding predicted behavior of the pedestrian 2 that, when executed by the ego-vehicle 1 and the pedestrian 2, provides a possible resolution to a current traffic situation in the environment. The behavior planner of the assistance system 10 determines this combination from a plurality of possible combinations of ego-behaviors and predicted behaviors determined in steps S4 and S5. In particular, the behavior planner selects the combination from a plurality of possible combinations of ego-behaviors and predicted behaviors based on a joint cost evaluation. The joint cost evaluation takes the interests of both interaction partners, which include the ego-vehicle 1 and the pedestrian 2 into account. Therefore, the selected combination represents the best joint resolution from all possible combinations of one ego-behavior and one predicted other behavior.

In step S7, the assistance system controls operation of the ego-vehicle 1 based on the ego-behavior of the selected combination.

Steps S8, S9, and S10 are steps that a communication system (communication module 16) executes based on the selected combination that comprises the (selected) planned behavior of the ego-vehicle 1 and the corresponding (selected) predicted behavior of the pedestrian 2. Steps S8, S9, and S10 are at least in part executed in parallel to step S7.

In step S8, the communication system decides whether to output a signal to the pedestrian 2 based on analyzing whether at least one set of criteria is fulfilled based on the selected combination of one planned ego-behavior and one corresponding predicted behavior.

In step S9, the communication system generates a signal including information on the selected behavior of the ego-vehicle 1, the selected predicted behavior of the pedestrian 2, and preferably an uncertainty associated with the selected predicted behavior of the pedestrian 2.

In step S10, the method outputs, via an external human machine interface 17 (eHMI 17), the determined (generated) signal to the pedestrian 2.

The assistance method performs the whole processing sequence of steps S1 to S10 cyclically as indicated by the dotted line in fig. 1. The processing steps implement a prediction and behavior planning that extends for a predetermined time horizon T into the future.

Fig. 2 illustrates the basic traffic scenario involving an automated vehicle (ego-vehicle 1) and a pedestrian 2 that is useful for discussing embodiments of the assistance method.

The depicted traffic scenario includes the road 3 and the ego-vehicle 1 cruising along the road as indicated by the vehicle path 5 of the ego-vehicle 1. The pedestrian 2 is currently located close to one side of the road 3 and intends to cross the road 3 to the other side of the road as indicated by the pedestrian path 4. The intended crossing of the pedestrian 2 in the scenario of fig. 2 is predicted to occur at a location of the road 3 at which, e.g., neither traffic lights nor a marked pedestrian crossing support the crossing of the pedestrian 2. The shown scenario of the pedestrian 2 crossing the road 3 on which vehicles drive is one example scenario in the traffic environment that requires cooperation between two interaction partners, which in this scenario are the ego-vehicle 1 and the pedestrian 2. The depicted scenario is particularly advantageous for discussing the advantageous effects of the presented assistance system, as the pedestrian 2 is one example of a vulnerable road user that is exposed to a high risk in case of a failed interaction with other traffic participants. Other examples for vulnerable road users may include person riding bicycles or scooters.

The scenario of fig. 2 illustrates the concept of a shared traffic space (STS) that refers to the limited resource that both interaction partners, the ego-vehicle 1 and the pedestrian 2 share. It is to be noted that the shared traffic space is only one example of an interaction zone, that defines an area relevant for an interaction of the ego-vehicle 1 and the pedestrian 2, or, generally the ego-agent and another road user.

The limited spatial resource of the environment for which cooperation between the agents is required in fig. 2 is the shared traffic space 6. Traffic cooperation requires the agents as interaction partners to find a passing order, in the example for the ego-vehicle 1 and the pedestrian 2 for the shared traffic space 6 that results in a high benefit for both interaction partners. For more details of the concept of shared traffic spaces, reference is made to the publication "Asymmetry-based behavior planning for cooperation at shared traffic spaces" by R. Wenzel, M. Probst, T. Puphal, T. H. Weisswange, and J. Eggert, in: 2021 IEEE Intelligent Vehicles Symposium (IV). IEEE, 2021, pp. 1008-1015.

The relevance of the cooperation between the participants in resolving the traffic scenario of fig. 2 increases for scenarios that include unclear priorities concerning the precedence of the involved participants, e.g., a right of way scenario in road traffic. Such scenarios include an ambiguity, which for the pedestrian 2 and the ego-vehicle 1 of fig. 2 includes a continuous assessment of the evolvement of the situation in the environment based on their perception. The continuous re-assessing of the current situation for the pedestrian 2 and the ego-vehicle 1 is associated with an uncertainty about the intention of the respective other participant. Even assuming that both participants in the situation pursue their respective targets while simultaneously maintaining a courteous and respectful behavior towards the respective other participant, they may fail to agree on a joint resolution of the situation. The joint resolution of the situation benefits from the ego-vehicle 1 and the pedestrian 2 having knowledge about the intention of the respective other participant and the planned behavior of the respective other participant. The communication system of the embodiment deciding whether a communication is advantageous in order to identify a situation in which resolving the situation may benefit from a communication via the eHMI 17. In case of deciding in favor of a communication, the communication system of the ego-vehicle 1 generates and outputs a suitable signal, e.g. a visual message on the eHMI 17 to the pedestrian 2, in order to realize the benefits resulting from an extended communication by the assistance system 10.

Commonly, one distinguishes between implicit communication and explicit communication between traffic participants.

Implicit communication involves communicating via executing a dynamic behavior by the participant that is the source of the communication. The participant that is the communication target may infer implicitly information on the intention and the planned behavior (planned maneuver) of the participant acting as communication source from the executed and perceived state, e.g., including changes in state of the participant acting as communication source.

The participant may infer implicitly information about intent and planned maneuvers from the dynamic states of the other participant, that include, e.g., a velocity of the vehicle, a lateral offset from a center of a lane or to a center of a road, a change in velocity of the vehicle, a position of a pedestrian 2, an orientation of the pedestrian 2, a direction of movement of the pedestrian, a change in velocity of the pedestrian 2. The effectiveness of implicit communication cues may be only limited in scenarios, which include a low behavioral flexibility, e.g. resulting from close distances between the participants and low velocities of the participants. In traffic scenarios that have unclear priorities between the traffic participants, an explicit communication using, e.g., visual or auditory signals may support the implicit communication in order to arrive at a transparent and effective resolution of the traffic scenario that requires cooperation between the traffic participants. The communication framework of the embodiment, which uses explicit communication cues facilitates cooperation between the traffic participants, in particular between the ego-vehicle 1 as an automated vehicles and pedestrians 2. Transparency of the executed behavior of automated vehicles for other participants in a common traffic environment is achieve by using the eHMI 17, and an improved transparency may generally increase acceptance of automated vehicles in road traffic. Such improved acceptance may further improve cooperation between the participants..

The depicted situation of fig. 2 also indicates the distances for each traffic participant to the shared traffic space 6 on the respective path 4, 5. In case of a failed cooperation between the ego-vehicle 1 and the pedestrian 2, a collision event indicated in fig. 2 may occur at a location 7 in the environment at which the path 4 of the pedestrian 2 and the path 5 of the ego-vehicle 1 intersect. The ego-vehicle 1 has a distance $d_{STS,e}$ from its current location on the path 5 in the environment to the location at which the path 5 enters the shared traffic space 6. The pedestrian 2 has a distance $d_{STS,o}$ from its current location on the path 4 in the environment to the location at which the path 4 enters the shared traffic space 6.

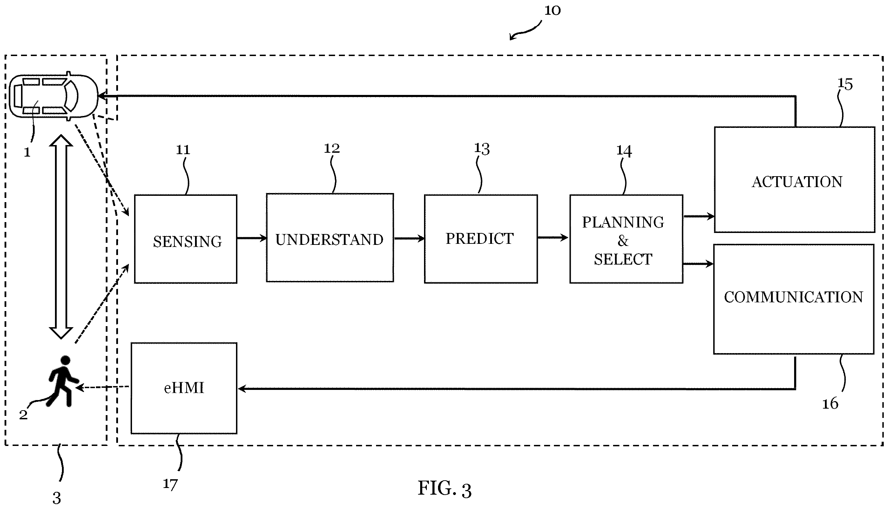

Fig. 3 illustrates the processing sequence in an assistance system 10 in an implementation of an embodiment of the assistance method.

The assistance system 10 may implement at least in part a known approach for risk-based behavior planning. Publication "Automated driving in complex real-world scenarios using a scalable risk-based behavior generation framework" by M. Probst, R. Wenzel, T. Puphal, M. Komuro, T. H. Weisswange, N. Steinhardt, B. Bolder, B. Flade, Y. Sakamoto, Y. Yasui et al., in 2021 IEEE International Intelligent Transportation Systems Conference (ITSC). IEEE, 2021, pp. 629-636, discusses, for example, the functional modules sensing module 11 (sensors 11), understanding module 12, predicting module 13, planning and selecting module 14 and actuating module 15. Consequentially, the discussion of the processing sequence focusses on the communication module 16, which implements the communication system of the assistance system 10.

The assistance system 10 is part of the ego-vehicle 1. The assistance system 10 interacts via the actuating module 15 with the environment by controlling movement of the ego-vehicle 1 either directly by issuing control signals to the actuators of the ego-vehicle 1 or indirectly by prompting a driver of the ego-vehicle 1 to perform respective driving actions.

The assistance system 10 includes an external human machine interface 17 (eHMI 17) arranged on the ego-vehicle 1 in a position such that the pedestrian 2 in the environment of the ego-vehicle 1 perceives messages and signals output by the assistance system 10.

The sensing module 11, the actuating module 15, and the eHMI 17 under control of the communication module 16 enable the ego-vehicle 1 to operate in the environment, e.g. including the road 3, and to cooperate simultaneously with the pedestrian 2. The discussion of the processing of the assistance system 10 uses the exemplary scenario of the pedestrian 2 intending to cross the road 3 on which the ego-vehicle 1 is driving based on fig. 2. The agents present in the environment include the ego-vehicle 1 and the pedestrian 2.

The sensing module 11 provides perception data that includes information on dynamic states of the agents present in the environment, which the sensing module 11 generates based on the sensor information provided by the sensors 25 monitoring the environment, and agent information on the ego-vehicle 1.

The assistance system 10 of the ego-vehicle 1 comprises several sensors 25 that perform measurements and provide sensor data (sensor information) about the ego vehicle 1 and its environment. The sensor information includes agent specific information such as state information on a dynamic state of the ego-vehicle 1 and other agents in the environment, including velocity, acceleration, orientation, yaw rate and localization information, e.g. position and orientation of each agent. Additionally, the sensor information may include road information such as lane geometries and road boundaries.

The understanding module 12 obtains the perception data from the sensing module 11, processes the perception data, interprets the perception data and, in particular, puts the perception data into the context of the current situation, thereby enhancing the information content of the sensor data obtained by the sensors 25 of the ego-vehicle 1 and other information sources, e.g. including, e.g., a vehicle odometer unit, a positioning system 28, or even roadside telemetry data acquired via x-to-vehicle communication.

The understanding module 12 acquires the perception data and derives contextual information about the ego vehicle 1 and other agents, in particular road users, i.e., the pedestrian 2 in the sensed environment from the acquired perception data. Deriving contextual information may include generating and providing a map that includes path options for the ego vehicle 1 and the other agents in the environment, including the pedestrian 2 in the present example scenario. Subsequently, the map paths are associated to the agents.

The understanding module 12 generates relational information defining the relation of the ego-vehicle 1 to the other agents in the environment of the ego-vehicle 1. E.g., the understanding module 12 generates relational information concerning the relation between the ego-vehicle 1 and the pedestrian 2. The assistance system 10 may model pedestrians 2 similarly as vehicles, e.g., by defining that the pedestrian 2 moves along a path 4 in the environment. The path 4 corresponds to a kinematic extrapolation starting at the current location of the pedestrian 2 into an extrapolated direction according to the current orientation of the pedestrian 2. The understanding module 16 may interpret a pedestrian 2 standing at a road curb or moving towards a road curb of the road 3 to intend to use a straight path 4 that the understanding module 16 infers based the perception data provided by the sensing module 11.

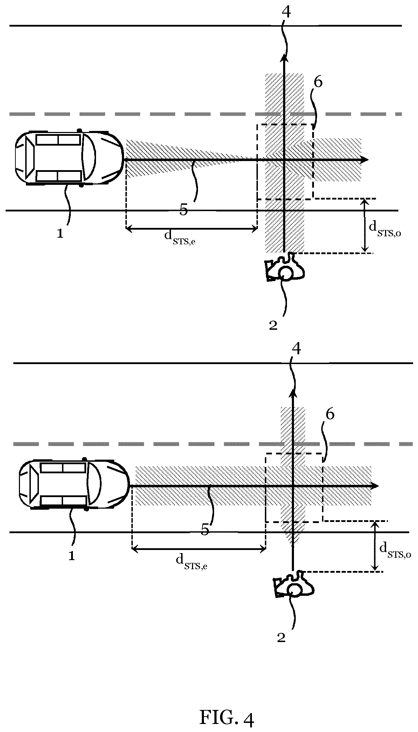

Furthermore, the understanding module 12 models the negotiation between the ego-vehicle 1 and the pedestrian 2 required for resolving the perceived situation in cooperative manner. The exemplary embodiment uses the concept of the shared traffic space 6 in an exemplary approach. The concept of the shared traffic space uses an encroachment zone, interaction zone or collision zone for modelling interactions between agents, in current situation vehicles and pedestrians. Each agent has two options with regard to the passing order of the two agents for the shared traffic space 6. The first option for an agent is to pass the shared traffic space 6 first and therefor before the other agent passes the shared traffic space 6. The second option for each agent is to pass the shared traffic space 6 as second, hence after the other agent has passed the shared traffic space 6. The variables $d_{STS,e}$ and $d_{STS,o}$ describing the respective distances of the current location of the agents to the shared traffic space 6 introduced in fig. 2 influence the negotiation of the passing order for the shared traffic space 6. Fg. 4 illustrates the two alternative options with the first option for the pedestrian 2 passing the shared traffic space 6 before the ego-vehicle 1 in the upper part of fig. 4 and the second option of the ego-vehicle 1 passing the shared traffic space 6 before the pedestrian 2 passes the shared traffic space in the lower part of fig. 4.

The predicting module 13 predicts a velocity profile for each of the behaviors corresponding to intentions of each agent. The intentions of each of the agents are semantically different from each other and may be assigned to either of the two options of the agent passing the shared traffic space 6 first in the first option or the agent passing the shared traffic space 6 second after the other agent in the second option.

The assistance system 10 and the predicting module 13 are not restricted to using two alternative options for resolving a scenario in the environment. Using two options and generating velocity profiles for each scenario enables to address a wide range of possible scenario resolutions without the significant computational complexity and corresponding cost associated with an extensive sampling of a large amount of predictions for behaviors and corresponding paths. The discussed processing framework may cover application scenarios with a different amount of predicted behavior alternatives, provided the predicted behavior alternatives refer to the shared traffic space 6 in such a manner that they may be assigned to one of the two options of either passing the shared traffic space 6 as first agent in the first option or passing the shared traffic space 6 as second agent in the second option.

The planning & selecting module 14 then performs planning the behavior of the ego-vehicle 1 based on the different predicted behavior options provided by the predicting module 13. Both the processing in the predicting module 13 and the processing in the planning & selecting module 14 is performed for a time horizon T during each processing cycle of the behavior planner. In case of the discussed road traffic scenario, the time horizon may, e.g., extend T = 12 s into the future.

The planning & selecting module 14 may generate a set of standardized velocity profiles as possible ego-behavior candidates. The standardized velocity profiles may include, e.g., a constant velocity profile, a strong braking velocity profile, or a smooth braking velocity profile. In addition to the standard velocity profiles as ego-behavior candidates, two optimized velocity profiles are computed for each of the predicted behavior options for the ego-vehicle 1. In combination with the predicted behaviors of the pedestrian 2, the planning & selecting module 14 optimizes the velocity profiles generated for the ego-vehicle 1 with respect to risk, utility, and comfort of the ego vehicle 1.

For an implementation of the behavior planning, the planning & selecting module 14 performs an optimization of the velocity profiles of the ego-vehicle 1 with respect to three cost criteria including risk, utility, and comfort. The optimization of the velocity profiles may use a cost function that preferably comprises a risk component and at least one of a utility component and a comfort component. The cost function may weight each component with a specific parameter. Such cost functions comprising plural different components enable to determine a behavior not only with respect to aspects of risk but also to other aspects like utility or comfort of the regarded agents. In such a case, the planning & selecting module 14 performs the optimization regarding the risk component, and, in addition, regarding of at least one of the utility component and the comfort component. Publication "Automated driving in complex real-world scenarios using a scalable risk-based behavior generation framework" by M. Probst, R. Wenzel, T. Puphal, M. Komuro, T. H. Weisswange, N. Steinhardt, B. Bolder, B. Flade, Y. Sakamoto, Y. Yasui et al., in 2021 IEEE International Intelligent Transportation Systems Conference (ITSC). IEEE, 2021, pp. 629-636, includes a more detailed discussion thereof.

After optimizing the ego-behavior candidates for the ego-vehicle 1, the planning & selecting module 14 evaluates the combinations of the predicted behavior of the pedestrian 2 with the ego-behavior candidates of the ego-vehicle 1 with respect to a joint costs function that takes the joint costs of both agents into account. The joint costs include risk, utility, and comfort cost components for both agents. The planning & selecting module 14 evaluates the optimized ego-behavior candidates only with respect to the predicted behavior, for which they have been optimized. The combination of the predicted behavior of the pedestrian 2 and the ego-behavior candidate that leads to the overall best joint costs based on the joint cost function is selected. The planning & selecting module 14 provides the selected ego-behavior of the selected combination of one planned ego-behavior and one associated predicted behavior of the pedestrian 2 to the actuating module 15 for execution by the ego-vehicle 1.

The embodiment bases the decision of the assistance system 10 on joint costs that take not only the target of the ego-vehicle 1 but also the interests of the pedestrian 2 into account. Hence, the selected combination of the one selected ego-behavior and the associated predicted behavior of the pedestrian 2 will improve the cooperative aspect of the resolution of the current situation in the environment.

The planning & selecting module 14 defines a set S that includes all eligible behavior combinations

$$S_{ij}^{j} = \left( v_{e,i}^{j}(t), v_{o,j}(t) \right) \tag{1}$$

of the ego-vehicle 1 and the pedestrian 2 as the interaction partner of the ego-vehicle 1. The superscript "j" in the term

$$v_{e,i}^{j}(t)$$

denotes that the ego-behavior of that combination of the ego-behavior of the ego-vehicle 1 and the associated predicted behavior $v_{o,j}(t)$ of the pedestrian 2 as the other agent has been optimized by the planning & selecting module 14 of the embodiment with respect to the associated predicted behavior $v_{o,j}(t)$ and is therefore an eligible combination of one ego-behavior of the ego-vehicle 1 and the associated predicted behavior $v_{o,j}(t)$ of the pedestrian 2. In the expression (1), $v_{o,j}(t)$ denotes the predicted velocity profile of the other agent, in present example the predicted velocity profile of the pedestrian 2. From here onwards, for sake of conciseness, the discussion of an embodiment dispenses with explicitly mentioning the indices i, j when referring to a single and unspecified solution S of the set of solutions $\mathbb{S}$.

After optimizing the predicted behaviors of the ego vehicle 1, the planning & selecting module 14 evaluates the optimized behaviors of the ego vehicle 1 and selects one combination of an optimized planned behavior of the ego-vehicle 1 and of an associated predicted behavior of the pedestrian 2 based on the lowest cost with respect to risk, utility, and comfort, according to expression

$$S^{*} = (v_{e}^{*}, v_{o}^{*}) := \arg\min_{S \in \mathbb{S}} \varphi(S) \tag{2}$$

In expression (2), $S^*$ denotes the selected combination S included in the set of solutions $S$, which has the minimum costs and the function $\varphi(S)$ denotes the joint costs for the combinations of planned behaviors of the ego-vehicle 1 and the predicted behavior of the pedestrian 2. The selected combination $S^*$ includes one planned behavior $v_{e}^{*}$ of the ego-vehicle 1 and one associated predicted behavior $v_{o}^{*}$ of the pedestrian 2. The planning & selecting module 14 then provides the selected behavior $S^*$ to the actuation module 15.

The actuation module 15 executes the selected planned behavior $v_{e}^{*}$ by controlling actuators, e.g., motors 24 or brakes of the ego-vehicle 1 based on the selected planned behavior $v_{e}^{*}$ of the selected combination $S^*$. In particular, the actuation module 15 generates control signals based on the selected planned behavior $v_{e}^{*}$ for controlling the actuators of the ego-vehicle 1 in order to implement the velocity profile associated with the selected planned behavior $v_e^*$ for moving on the path 5 of the ego-vehicle 1. In particular, the control signals accelerate or decelerate the movement of the ego-vehicle 1 along the path 5.

The communicating module 16 of the assistance system 10 extends the functionality of a modelling of the cooperation of the ego-vehicle 1 with the pedestrian 2 and of the planning of a cooperative behavior to enable an enhanced communication between the ego-vehicle 1 and other agents, in our example the pedestrian 2, in the road environment. The communicating module 16 provides a communication system that facilitates an enhanced cooperation and reduces an uncertainty of the ego-vehicle 1 about the behavior of the pedestrian 2.

The communicating module 16 obtains the selected combination S* from the planning & selecting module 14. By selecting the combination S*, the assistance system 10 and the ego-vehicle 1 make an assumption on a future behavior of the pedestrian 2. Without the communicating module 16 outputting a signal to the pedestrian 2, the pedestrian 2 as any other agent in the environment of the ego-agent 1 lacks any explicit information on an intended behavior of the ego-agent 1 and on assumptions on the behavior of the pedestrian 2 that the ego-vehicle 1 has made during the planning and selecting process for determining the intended behavior.

The communicating module 16 executes a heuristic decision making algorithm for deciding whether to communicate the intended behavior to the other agent, and then generates and outputs a signal for communication to the other agent in case of deciding that a communication with the other agent is to be initiated.

The communicating module 16 may execute the heuristic decision making algorithm based on semantic criteria and based on the received selected combination S* and the set of combinations S provided by the planning & selecting module 14. The following discussion of the processing in the communicating module 16 uses the specific example of the traffic scenario in which the pedestrian 2 is predicted to intend to cross the road 3 on which the ego-vehicle 1 is approaching towards the location of the predicted crossing. Furthermore, the preceding processing executed by the assistance system 10 selected the ego-behavior belonging to the second option of the ego-vehicle 1 intending to pass the shared traffic space 6 after the pedestrian 2 has passed the shared traffic space 6. In other words, the ego-vehicle 1 selects the option of a yielding intent for a cooperative behavior in the current traffic scenario.

It is noted that if the ego-vehicle 1 communicates its yielding intent to the pedestrian 2, it therefore expects the pedestrian 2 to cross the road 3, in particular the shared traffic space 6, before the ego-vehicle 1 enters the shared traffic space 6. In case the pedestrian 2 misinterprets the communication from the ego-vehicle 1, or the communication of the yielding intent fails, the result of the pedestrian 2 not passing the shared traffic space may cause an inefficient behavior. However, the inefficient behavior implying that both the pedestrian 2 and the ego-vehicle 1 do not come closer to the respective other agent, will not result in any critical situation occurring. Hence communicating the yielding intent of the ego-vehicle 1 to the pedestrian 2 reduces the uncertainty associated with the predicted behavior of the pedestrian 2, without risking to have to act suddenly in an evolved situations, which requires responding with emergency maneuvers by either agent.

The communicating module 16 may start processing as soon as the planning & selecting module 14 selected a combination S* including the selected planned behavior of the ego-vehicle 1 and the selected predicted behavior of the pedestrian 2.

For deciding whether to output a signal to the pedestrian 2, the communicating module 16 uses the planned behaviors for the ego-agent 1, and the predicted behaviors of the pedestrian 2.

The communicating module 16 maps all planned behaviors for the ego-agent 1 and the predicted behaviors of the pedestrian 2 to either the first option of the ego-vehicle 1 passing the shared traffic space 6 first, or the second option of letting the pedestrian 2 first pass the shared traffic space 6 and then the ego-vehicle 2 passing second to the pedestrian 2.

During each planning cycle of the assistance system 10, the communication module 16 computes the distance $s_e$ ($t$) as the distance the ego-agent 1 will travel and the distance $s_o$ ($t$) as the distance the other agent (pedestrian 2) will travel based on the planned ego-behavior and the predicted behavior respectively by integrating over the respective velocity profiles of the respective agent.

Then, the communication module 16 determines a subset $\mathcal{O} \subseteq \mathbb{S}$ of combinations of planned ego-behaviors and predicted behaviors that represent solutions S, which provide the result that the pedestrian 2 passes the shared traffic space before the ego-vehicle 1 passes the shared traffic space.

The time at which an agent enters the shared traffic space, e.g., the time the agent reaches a position that lies ahead of the agent on the path 4, 5 at a distance of $d_{STS,e}$ or $d_{STS,o}$ respectively is assumed as the time of passing the shared traffic space. This assumption is deemed correct as, as soon as the first agent, either the ego-vehicle 1 or the pedestrian 2, enters the shared traffic space 6, the order of passing the shared traffic space 6 is determined and any negotiation concerning the order of passing terminates. Hence, the subset 0 is defined by

$$\mathcal{O} := \left\{ S \in \mathbb{S} \mid \arg\min_{t \in T}\big(s_e(t) \geq d_{STS,e}\big) \geq \arg\min_{t \in T}\big(s_0(t) \geq d_{STS,0}\big) \right\} \qquad (3)$$

In expression (3), the set *T* denotes the time horizon for the prediction and planning of the assistance system 10. The communication module 16 further defines a subset $\mathcal{E} \subseteq \mathbb{S}$, which includes all combinations of planned ego-behaviors and predicted behaviors that provide the result that the ego-vehicle 1 passes the shared traffic space before the pedestrian 2 passes the shared traffic space. Hence, the subset $\varepsilon$ is defined by

$$\mathcal{E} := \left\{ S \in \mathbb{S} \mid \arg\min_{t \in T}\big(s_e(t) \geq d_{STS,e}\big) < \arg\min_{t \in T}\big(s_0(t) \geq d_{STS,0}\big) \right\} \qquad (4)$$

A solution *S* corresponding to a combination of a planned ego-behavior and a predicted behavior, which has the result that no agent, neither the ego-vehicle 1 nor the pedestrian 2 reaches the shared traffic space 6 within the time horizon T, is classified as part of the subset *O*. Each possible combination of a planned ego-behavior and a predicted behavior is a unique member of exactly one of the two subsets *O* and $\varepsilon$. The union of the two subsets *O* and $\varepsilon$ includes all possible combinations such that $\mathbb{S} = \mathcal{O} \cup \mathcal{E}$ applies.

The communicating module 16 of the discussed embodiment evaluates a set of criteria comprising plural semantic criteria for deciding whether to generate and output a signal to the other agent, e.g. the pedestrian 2 of the discussed application example.

A first set of criteria is to be fulfilled in order to decide communicating the intention of the ego-vehicle 1 to give the pedestrian 2 the possibility to pass the shared traffic space 6 first is to be performed.

A second set of criteria is to be fulfilled in order to decide that communicating the intention of the ego-vehicle 1 to pass the shared traffic space 6 first, before the pedestrian 2 passes the shared traffic space 6 is to be performed. The first set of criteria includes a first criterion that defines that the subset *O* that includes all combinations or solutions S, which have the result that the pedestrian 2 passes the shared traffic space 6 before the ego-vehicle 1 passes the shared traffic space 6 must not be empty, or in other words, includes at least one combination of a planned ego-behavior and a predicted behavior. The first criterion of the first set of criteria may be formulated as

$$\mathcal{O} \neq \emptyset \qquad (5)$$

Hence, the first criterion according to equation (5) is fulfilled in case the subset *O* is not empty. A second criterion of the first set of criteria is fulfilled in case the selected combination *S\**, which is optimized with regard to the lowest joint cost results in the pedestrian 2 passing the joint traffic space 6 before the ego-vehicle 1 passes the joint traffic space 6. The second criterion of the first set of criteria may be formulated as

$$S^* \in \mathcal{O} \qquad (6)$$

The first set of criteria according to expression (6) has the result that the communication system implemented by the communication module 16 only communicates in a situation in which the pedestrian 2 should indeed pass the joint traffic space 6 before the ego-vehicle 1 passes the joint traffic space 6. A third criterion of the first set of criteria is fulfilled in case the subset $\varepsilon$ that comprises all combinations of one planned ego-behavior and one associated predicted behavior in which the ego-vehicle 1 passes the shared traffic space 6 before the pedestrian 2 passes the shared traffic space 6 is not empty, hence, expression (7) applies:

$$\mathcal{E} \neq \emptyset . \qquad (7)$$

The third criterion of the first set of criteria according to expression (7) has the effect that a communication of the ego-vehicle's yielding intention according to the selected planned behavior is required to reduce an uncertainty about possible other ego-behaviors of the ego-vehicle 1. If the subset $\varepsilon$ would be indeed empty, and in consequence all combinations of planned ego-behaviors and predicted behaviors form part of the subset *O*, any communication including the information that the pedestrian 2 should pass before the vehicle the shared traffic space 6 would be redundant as all combinations inevitably imply a same result.

The third criterion may be explained in more detail by discussing the predicted behavior and the planned ego-behavior regarding the respective agents participating in the negotiation of cooperative behavior for resolving the traffic situation. When looking at the planned ego-behavior of the ego-vehicle 1 from the perspective of the pedestrian 2, the different behavior plans represent possible prediction options from the perspective of the pedestrian 2. Only in case there exists at least one combination or solution $S$, which includes the ego-vehicle 1 passing the shared interaction space 6 before the pedestrian 2 passes the shared interaction space 6, this combination is within the scope of possible resolutions of the situation from the viewpoint of the pedestrian 2.

In case the second criterion according to expression (6) is fulfilled, and, additionally, that the subset $\varepsilon$ is not empty according to the third criterion, the communicating module 16 determines a combination $S' \in \varepsilon$ that defines a best combination of a planned ego-behavior and an associated predicted behavior that provides the result that the ego-vehicle 1 passes the shared traffic space 6 before the pedestrian 2 passes the shared traffic space 6. In mathematical terms, this reads as expression (8)

$$S' = (v'_e, v'_{0o}) := \arg \min_{S \in \varepsilon} \varphi(S) \qquad (8)$$

Expression (8) defines the best alternative combination or solution $S'$ that allows the ego-vehicle 1 to pass the shared traffic space 6 before the pedestrian 2 passes the shared traffic space 6. In case the subset $\varepsilon$ is empty, the combination $S'$ is not defined. In consequence of $S'$ not existing, the communicating module 16 decides against communicating a signal to the pedestrian 2 due to all considered combinations resulting in a same outcome. The respectively best ego-behaviors, including the selected ego-behavior $v_e^*$ and the best alternative next best ego-behavior $v'_e$ are not required to be different. For example, the selected ego-behavior $v_e^*$ and the best alternative ego-behavior $v'_e$ may include the ego-vehicle 1 continuing to drive with a constant velocity independent from the respective predicted behaviors $v_o^*$ and $v'_e$ of the pedestrian 2, if the ego-vehicle 1 is sufficiently remote from the shared traffic space 6. Hence, for determining a forth criterion of the first set of criteria, the communicating module 16 uses the combination $S'$, which describes the best combination of the planned ego-behavior and the predicted behavior of the pedestrian 2 that has the effect of the ego-vehicle 1 passing the shared traffic space 6 before the pedestrian 2. The communicating module 16 uses the combination S' for determining whether the ego-behavior $v_e^*$ and the best alternative ego-behavior $v'_e$ are sufficiently different from each other, which implies that the ego-vehicle 1 has to explicitly decide for executing a certain ego-behavior. The communicating module 16 determines whether the ego-behavior $v'_e$ and the best alternative ego-behavior $v'_e$ are sufficiently different with regard to a longitudinal acceleration $a_e^*$ and $a'_e$ of the ego-vehicle 1. The communicating module 16 evaluates a first time duration $\Delta T$ of the time horizon T of the prediction and planning cycle, in order to take into account that changes in the immediate future have the largest impact on the further evolution of the situation. The communicating module 16 computes the average accelerations $\bar{a}^*_{e,\Delta T}$ and $\bar{a}'_{e,\Delta T}$ within $\Delta T$ according to

$$\bar{a}^{*/t}_{e,\Delta T} = \frac{1}{\Delta T} \left( v_e^{*/\prime}(t_0 + \Delta T) - v_e^{*/\prime}(t_0) \right) \qquad (9)$$

with $t_0$ denoting the current time step in expression (9). Hence, a fourth criterion of the first set of criteria is defined as

$$\left| \bar{a}^*_{e,\Delta T} - \bar{a}'_{e,\Delta T} \right| > \varepsilon \qquad (10)$$

which defines whether the ego-behavior $v_e^*$ and the best alternative ego-behavior $v'_e$ are sufficiently different with regard to a longitudinal acceleration $a_e^*$ and $a'_e$ of the ego-vehicle 1, by comparing the absolute of the difference of the average accelerations $\bar{a}^*_{e,\Delta T}$ and $\bar{a}'_{e,\Delta T}$ exceeds a first threshold $\varepsilon$.

In an exemplary embodiment, the first threshold $\varepsilon$ for determining whether the fourth criterion of the first set of criteria has been met has been predetermined to $\varepsilon = 0.2 \frac{m}{s^2}$ and the first time duration $\Delta T$ of the time horizon T has been determined to $\Delta T = 4s$. However, the given predetermined values may be subject to adjustment for other, real world interaction scenarios. The fourth criterion is advantageous due to ensuring that the communication system does not use an extensive signaling, in particular the communicating module 16 decides to generate and output signals to the pedestrian 2 only in cases in which the communication has an actual impact on the uncertainty associated with the planned ego-behavior of the ego-vehicle 1 since the ego-vehicle 1 has to make a maneuver decision according to the planned ego-behavior combinations.

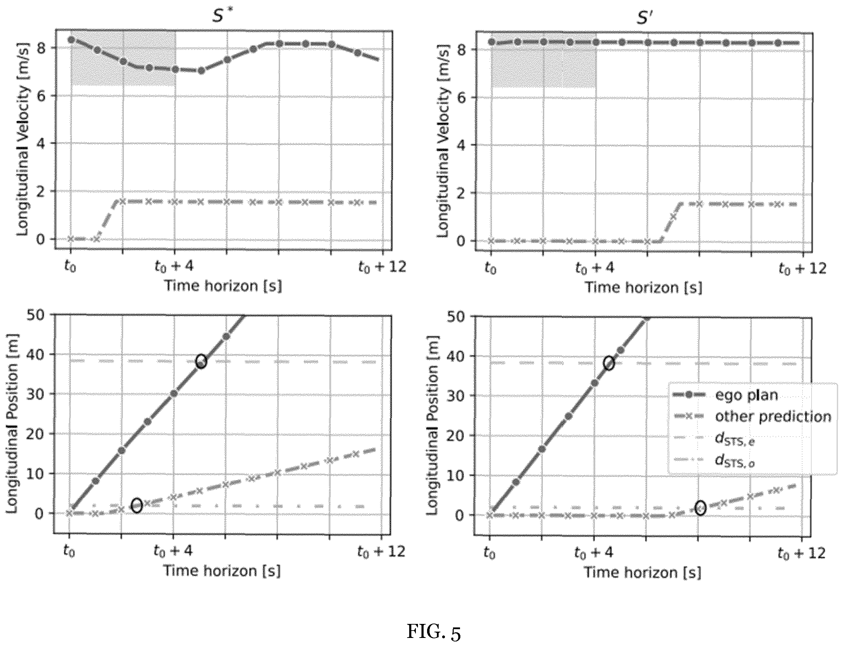

Velocity profiles of the selected planned ego-behavior $v_e^*$ and the next best planned ego-behavior $v'_e$ and respective position profiles of the selected combination S* and the next best, alternative solution S, as well as respective velocity profiles of the selected predicted pedestrian behavior $v_e^*$ and the best alternative predicted pedestrian behavior $v'_e$ and respective position profiles of the selected combination S*, and the best, alternative solution S' are shown in fig. 5.

The communicating module 16 generates a signal including output information and provides the generated signal to the eHMI 17. The generated signal includes information on the selected ego-behavior executed by the ego-vehicle 1, the predicted behavior of the pedestrian 2 expected to be carried out by the pedestrian 2 and the uncertainty of that expectation. Outputting the generated signal has the effect of making the reasoning behind decision made by the assistance system 10 transparent and understandable for the pedestrian 2.

The eHMI 17 outputs the generated signal to the pedestrian 2. In an embodiment, the eHMI 17 includes a display configured to output a text message to the pedestrian 2.

The eHMI 17 of one specific embodiment includes a display, e.g. a LED display, arranged in the grille of the ego-vehicle 1. The communicating module 16 may generates short text messages based on the information on the selected ego-behavior executed by the ego-vehicle 1, the predicted behavior of the pedestrian 2 expected to be carried out by the pedestrian 2 and the uncertainty of that expectation.

An exemplary text message generated by the communicating module 16 for the first option may read "I am yielding because I am not sure whether you will cross".

Another exemplary text message generated by the communicating module 16 for the second option may read "I will drive on because I assume that you will wait".

Hence, the eHMI 17 is controlled by the communicating module 16 to output a message to the pedestrian 2 hat informs the pedestrian 2 not only about the intention and the future ego-behavior of the ego-vehicle 1, but also about the expected behavior of the pedestrian 2, and the uncertainty of that expectation.

Fig. 4 illustrates examples of behaviors and interactions in the road traffic scenario of fig. 2 for illustrating an embodiment.

Fig.4 displays the two alternative options for resolving the exemplary traffic scenario of fig. 2. The first option for the pedestrian 2 passing the shared traffic space before the ego-vehicle 1 is in the upper partial figure and the second option of the ego-vehicle 1 passing the shared traffic space before the pedestrian 2 passes the shared traffic space is in the lower partial figure of fig. 4.The first and the second option represent the two alternative resolutions of the current situation in the environment. In both partial figures of fig. 4, the rectangular area to the front in driving direction of the ego-vehicle 1 represents the shared traffic space. The width of the bars to the front of ego-vehicle 1 and to the front of the pedestrian 2 respectively represent the velocity of the ego-vehicle 1 and the pedestrian 2 at that specific position along the path 4, 5 according to the respectively executed selected combination of the planned ego-behavior of the ego-vehicle 1 or predicted behavior of the pedestrian 2.

Fig. 4 shows possible resolutions for the application scenario of fig. 2 including the pedestrian 2 intending to traverse the road 3 on which the ego-vehicle 3 is moving. In particular, fig. 4 displays the two different behavior intentions of the pedestrian 2.

Fig. 5 shows velocity profiles of the selected planned ego-behavior $v_e^*$ and respective position profiles of the selected combination S* in the left column of fig. 5 respectively.The right column of fig. 5 displays the velocity profiles of the planned ego-behavior $v'_e$ and respective position profiles of the next best, alternative combination S'. Hence, the left column of fig. 5 displays a solution S* in which the ego-vehicle 1 decelerates in order to let the pedestrian 2 traverse the road 3. The right column of fig. 5 displays the alternative solution S' in which the ego-vehicle 1 passes the shared traffic space first and the pedestrian 2 then traverses the road 3 after the ego-vehicle 1 passed the shared traffic space 6. Fig. 5 shows that when executing the planned ego-behavior of solution S', the pedestrian 2 reaches the shared traffic space 6 before the ego-vehicle 1 when the ego-vehicle 1 executes the planned ego-behavior of the selected combination S*. In the illustrated example of fig. 5, the communicating module 16 decides based of the first, second, third and fourth criterion of the first set of criteria being fulfilled, that the ego-vehicle 1 intends the pedestrian 2 to pass the shared traffic space 6 before the ego-vehicle 1.

Fig. 5 displays the velocity and position profiles over the prediction horizon T = 12 s for one planning cycle of the assistance system 10. The plots of the displayed profiles begin at the current time $t_o$ and terminate at the end of the prediction horizon $t_o$ + T. In the plots of the position profiles in the lower portion of fig. 5, the circular marks denote the time and the position at which the agents respectively reach the shared traffic space 6 on their respective paths 4, 5. The upper portion of fig. 5 depicting the velocity profiles $v_e^*$ and $v'_e$ and the velocity profiles $v_e^*$ of the ego-agent 1, and of the other agent, also shows a marked area, which indicates the time duration $\Delta$T, which corresponds to the first 4 s of the time horizon T = 12s. During the time duration $\Delta$T of the planned ego-behavior, the ego-vehicle 1 determines based on the planned ego-behavior for a distinct driving maneuver.

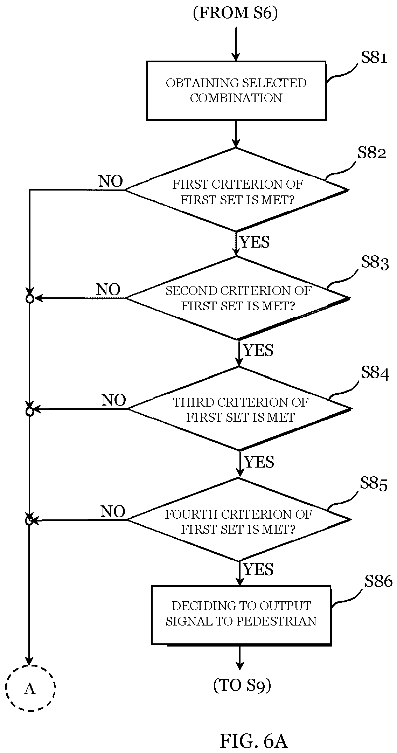

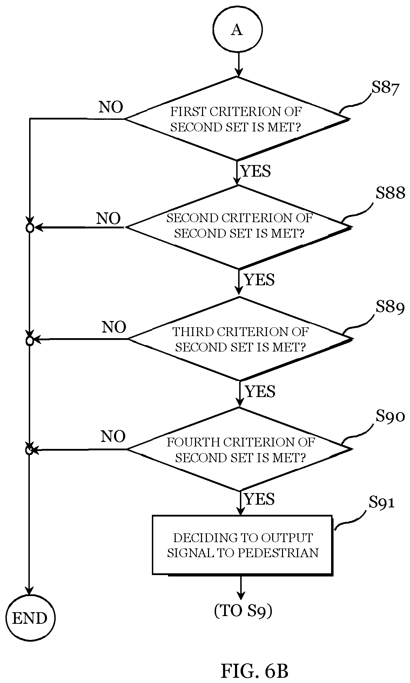

Fig. 6A and Fig. 6B provide flowcharts illustrating processing examples in the communication system according to an embodiment.

Fig. 6A specifically illustrates a first example of the step S8 of the flowchart of fig. 1. In step S8 following to step S6, the communicating module 16 starts with deciding whether to output a signal to the pedestrian 2 based on evaluating at least one set of criteria and based on the uncertainty associated with the selected predicted behavior of the pedestrian 2. In step S81, the communicating module 16 obtains the combinations of one planned ego-behavior and one associated predicted behavior of the pedestrian 2 from the planning & selecting module 14.

In step S82, the communicating module 16 evaluates the first criterion of the first set of criteria. In case of determining that the first criterion is met ("YES") based on the evaluation of the first criterion and the combinations of one planned ego-behavior and one associated predicted behavior, the method proceeds to step S83. In case that evaluating the first criterion of the first set of criteria in step S82 reveals that the first criterion is not met ("NO), the processing of evaluating the first set of criteria in steps S82 to S85 terminates. In case of terminating evaluation of the first set of criteria, the method proceeds either with evaluating another set of criteria, or with deciding that the current situation in the environment does not benefit from a communication and therefore determines not to generate and output a signal including a message via the eHMI 17 to the other agent, e.g. the pedestrian 2. In the latter case, the communicating module 16 entirely ceases to operate for the current processing cycle.

In step S83, the communicating module 16 evaluates the second criterion of the first set of criteria. In case of determining that the second criterion is met ("YES") based on the evaluation of the second criterion and the combinations of one planned ego-behavior and one associated predicted behavior, the method proceeds to step S84. In case that evaluating the second criterion of the first set of criteria in step S83 reveals that the second criterion is not met ("NO"), the processing of evaluating the first set of criteria in steps S82 to S85 terminates. In case of terminating evaluation of the first set of criteria, the method proceeds either with evaluating another set of criteria, or with deciding that the current situation in the environment does not benefit from a communication and therefore determines not to generate and output a message via the eHMI 17 to the other agent, e.g. the pedestrian 2. In the latter case, the communicating module 16 entirely ceases to operate for the current processing cycle.

In step S84, the communicating module 16 evaluates the third criterion of the first set of criteria. In case of determining that the third criterion is met ("YES") based on the evaluation of the second criterion and the combinations of one planned ego-behavior and one associated predicted behavior, the method proceeds to step S85. In case that evaluating the second criterion of the first set of criteria in step S84 reveals that the second criterion is not met ("NO), the processing of evaluating the first set of criteria in steps S82 to S85 terminates as discussed with regard to steps S82 and S83 before. In case of terminating evaluation of the first set of criteria, the method proceeds either with evaluating another set of criteria, or with deciding that the current situation in the environment does not benefit from a communication and therefore determines not to generate and output a message via the eHMI 17 to the pedestrian 2. In the latter case, the communicating module 16 entirely ceases to operate for the current processing cycle.

In step S85, the communicating module 16 evaluates the fourth criterion of the first set of criteria. In case of determining that the fourth criterion is met ("YES") based on the evaluation of the fourth criterion and the combinations of one planned ego-behavior and one associated predicted behavior, the method proceeds to step S86. In case that evaluating the second criterion of the first set of criteria in step S85 reveals that the fourth criterion is not met ("NO), the processing of evaluating the first set of criteria in steps S82 to S85 terminates as discussed with regard to steps S82 to S84 before. In case of terminating evaluation of the first set of criteria, the method proceeds either with evaluating another set of criteria, or with deciding that the current situation in the environment does not benefit from a communication and therefore determines not to generate and output a message via the eHMI 17 to the pedestrian 2. In the latter case, the communicating module 16 entirely ceases to operate for the current processing cycle.

In step S86, which the communicating module 16 executes in case the criteria of the first set of criteria are cumulatively met, the communicating module 16 decides that a signal is to be output to the pedestrian 2 and proceeds to step S9 for generating the signal as discussed with reference to step S9 of fig. 1.

In case of deciding in one of steps S82, S83, S84, and S85 that one of the first to fourth criteria of the first set of criteria has not been met, the communicating module 16 may proceed to evaluating a further set of criteria as indicated by the circled "A" in fig. 5A. In that case, a further set of criteria, e.g., the second set of criteria as discussed with reference to fig. 5B may be evaluated.

Fig. 6B specifically illustrates a further example of the step S8 of the flowchart of fig. 1. In step S8 following to step S6 of fig. 1, the communicating module 16 proceeds with deciding whether to output a signal to the pedestrian 2 based on evaluating a second set of criteria. The structure of evaluating the second set of criteria in the embodiment of fig. 6B corresponds to the structure of evaluating the first set of criteria in steps S82 to S86 of fig. 6A. In case of determining in steps S87, S88, S89 and S90 of fig. 6B that, based on the combinations of one planned ego-behavior and one associated predicted behavior of the other agent provided by the planning & selecting module 14, all the criteria of the second set of criteria are fulfilled, the communicating module 16 proceeds to step S91. In step S91, the communicating module 16 decides that the criteria of the second set of criteria are cumulatively met, and therefore the communicating module 16 concludes that a signal is to be output to the pedestrian 2 and proceeds to step S9 for generating the signal as discussed with reference to step S9 of fig. 1.

Additionally, the communicating module 16 may evaluate yet a further set of criteria in case the communicating module 16 decides that neither the first set of criteria nor the second set of criteria are met in order to decide whether to output a signal to the other agent.

The second set of criteria may include a first criterion, a second criterion, a third criterion, and a fourth criterion.

The first criterion of the second set of criteria defines that at least one combination of one ego-behavior with one predicted behavior results in the ego-agent 1 passing the shared traffic space 6 before the at least one other agent passes the shared traffic space 6. In the exemplary traffic scenario of fig. 2, the ego-agent is the ego-vehicle 1 and the at least one other agent is the pedestrian 2. The first criterion of the second set of criteria determines whether at least one of the possible behavior combinations leads to the ego-vehicle 1 passing the shared traffic space 6 before the pedestrian 2 passes the shared traffic space 6.

In step S87 of fig. 5B, the communicating module 16 evaluates whether the first criterion of the second set of criteria is met based on the combinations of one planned ego-behavior of the ego-agent and one associated predicted behavior of the other agent each.

The second criterion of the second set of criteria defines that executing the selected behavior includes the ego-vehicle 1 passing the shared traffic space 6 before the pedestrian 2 passes the shared traffic space 6. The second criterion evaluates whether the selected combination including the selected ego-behavior and the associated predicted behavior of the pedestrian 2, and hence the selected ego-behavior that the ego-vehicle 1 is about to perform leads to the ego-vehicle 1 passing the shared traffic space 6 first.

.The effect of the second criterion is that, by executing the behavior of the selected combination, the ego-vehicle 1 passes the shared traffic space 6 before the pedestrian passes the shared traffic space 6.

In step S88 of fig. 6B, the communicating module 16 evaluates whether the second criterion of the second set of criteria is met based on the combinations of one planned ego-behavior and one associated behavior each.

The third criterion of the second set of criteria defines that at least one combination of one planned ego-behavior of the ego-vehicle 1 and one associated predicted behavior of the pedestrian 2 exists for which the pedestrian 2 passes the shared traffic space 6 before the ego-vehicle 1 passes the shared traffic space 6. The third criterion covers the uncertainty about the resolution of the interaction and ensures that the option of the pedestrian 2 passing the shared traffic space 6 before the ego-vehicle 1 does is a realistic option within the scope of possible resolutions of the situation.

In step S89 of fig. 6B, the communicating module 16 evaluates whether the third criterion of the second set of criteria is met based on the combinations of one planned ego-behavior and one associated behavior each.

The fourth criterion of the second set of criteria defines that a difference between an ego-behavior included in an alternative combination of one planned ego-behavior with one predicted other behavior different than the selected combination and the one ego-behavior of the selected combination exceeds a second threshold. The fourth criterion of the second set of criteria determines that the decision is for either of two options that are sufficiently different from each other. The difference between the ego behavior options may be determined in terms of a vehicle acceleration of the ego-vehicle 1. Alternative measures for determining whether the ego-behavior options are different from each other may be used. The fourth criterion of the second set of criteria represents that the ego-vehicle 1 or its driver need to decide for either of the two options of either the ego-vehicle 1 passing the shared traffic space 6 before the pedestrian 2 or letting the pedestrian 2 pass before the ego-vehicle 1 passes the shared traffic space 6. In case the the ego-behavior options are sufficiently different from each other, the communication of a message to a driver of the ego-vehicle 1 has an impact on the actual ego-behavior.

In step S90 of fig. 6B, the communicating module 16 evaluates whether the fourth criterion of the second set of criteria is met based on the combinations of one planned ego-behavior and one associated behavior each.

If all the criteria of the second set of criteria are met, the communicating module 16 proceeds to step S91 and decides in favor of generating the signal and outputting the signal via the eHMI 17 to the pedestrian 2.

The second set of criteria evaluated in the embodiment of fig. 6B represents the complementary criteria to the first set of criteria according to fig. 6A. Fulfilling the second set of criteria as the complementary set to the first set of criteria causes the communicating module 16 to generate and output a signal such that the ego-vehicle 1 communicates to the pedestrian 2 that the ego-vehicle 1 will drive on because the assistance system 10 of the ego-vehicle 1 concludes that the pedestrian 2 will wait until the ego-vehicle 1 has passed the shared traffic space 6. Thereby the ego-vehicle 1 communicates to the pedestrian 2 that the assistance system 10 of the ego-vehicle 1 assumes the selected ego-behavior to be the better resolution of the current situation in the traffic environment.

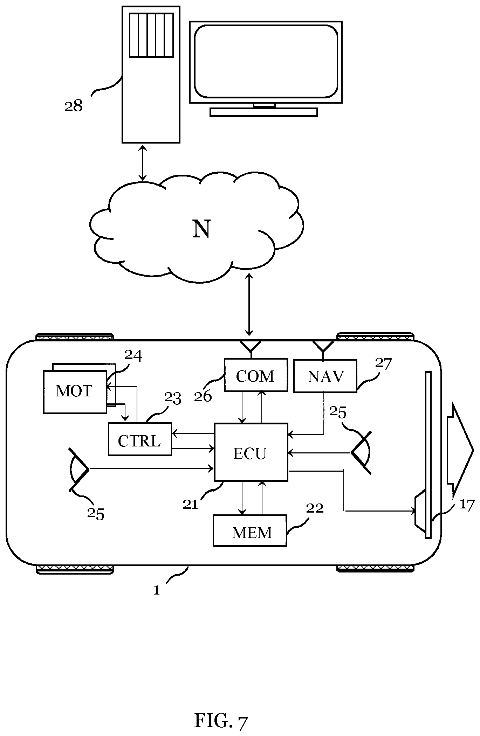

Fig. 7 shows a simplified example for structural elements of an automated vehicle suitable for implementing an embodiment. Fig. 7 also illustrates a system structure suitable for implementing different embodiments of the driver assistance system 10 for supporting a driver in operating the ego-vehicle 1 in a road traffic environment.

The assistance method of an embodiment may be implemented in software comprising a program executed by at least one processor 21 (electronic control unit) of the ego-vehicle 1. In a further embodiment, the computer-implemented method is executed in a distributed manner on the at least one processor 21 of the ego-vehicle 1, and of at least one processor of a server 28 arranged remote from the ego-vehicle 1.

The server 28 may include a human machine interface, which enables to access, control, or modify the processing of the computer-implemented method and other elements of the driver assistance system according to an embodiment. The server 28 may include one or plural processors, e.g., central processing units (CPU), signal processors, and associated memory, e.g., including read-only memory (RAM), read only memory (ROM), and disk data storage, flash memory, for naming some known structural elements.

The driver assistance system 10 of the ego-vehicle 1 may obtain sensor information on the environment of the ego-vehicle 1 from its own sensors 25 or from sensors arranged externally to the ego-vehicle 1 via the network N and a communication interface 26 of the ego-vehicle 1. The sensors of the ego-vehicle 1 may also include a navigation system 27, e.g. a navigation receiver of a global navigation satellite system (GNSS) providing navigation services using a plurality of navigation satellites. The navigation system 27 provides time information, as well as location information and orientation information of the ego-vehicle 1.

The ego information provided by sensors 25, 27 of the ego-vehicle 1 may include information on the position, orientation, velocity, acceleration or deceleration of the ego-vehicle 1, on throttle position, steering angle, gear selection, motor parameters, e.g., a rotational speed or a torque value of at least one drive motor 24. The drive motor 24 and further actuators not explicitly shown in fig. 7, including brakes for longitudinal control or a steering assembly for lateral control of the ego-vehicle 1 are controlled by the processor 21 via a drive controller 23.

The processor 24 may provide control signals for controlling operation of the ego-vehicle 1 to the drive controller 23.

The ego-vehicle 1 includes a communication interface 26. The communication interface 26 enables wireless communication between the ego-vehicle 1 and other agents and with infrastructure of the road traffic environment. In particular, the communication interface 26 may enable direct communication with other vehicles in the environment of the ego-vehicle 1, which also include respective communication interfaces.

The communication interface 26 may enable communication via a network N with other elements of the road traffic environment. The other elements may include the server 28.

The communication interface 26 may enable communication via a network N with humans such as pedestrians or cyclists having personal devices, e.g., smartphones, which also form part of the road traffic environment.

The communication interface 26 may support communication to integrate the ego-vehicle 1 into a V2X system by transmitting and receiving signals from other vehicles and traffic infrastructure, for example.

The ego-vehicle 1 further includes a data storage device 22 (memory 22).

The ego-vehicle A of fig. 7 further includes an output module including an external human machine interface 17 (eHMI 17). The eHMI 17 may include means for outputting information via different modalities, in particular visually, acoustically, or haptically to the environment of the ego-vehicle 1. The eHMI 17 may include a display for visually outputting short text strings to persons arranged in the frontal arc in a driving direction of the ego-vehicle 1.

The eHMI 17 may further include at least one loudspeaker for outputting acoustic signals to the exterior of the ego-vehicle 1. The processor 21 may change the modality of the output signals to the exterior of the ego-vehicle 1. Alternatively or additionally, the processor 21 may adapt the strength, e.g., an output intensity, of the signal conveying the information to the exterior of the ego-vehicle 1.

All features described above or features shown in the figures can be combined with each other in any advantageous manner within the scope of the attached claims. In the detailed discussion of embodiments, specific details were presented for providing a thorough understanding of the invention defined in the claims. It is evident that putting the claimed invention into practice is possible without including all the specific details.

In the specification and the claims, the expression "at least one of A and B" may replace the expression "A and/or B" and vice versa due to being used with the same meaning. The expression "A and/or B" means "A, or B, or A and B".

## Claims

1. Method for assisting an ego-agent (1) in operating in a dynamic environment, wherein at least one other agent (2) is in the dynamic environment, the method comprising:

   acquiring sensor information on the dynamic environment, and agent information on the ego-agent (1);
   determining, for the at least one other agent (2), if there are at least two different potential future behaviors of the at least one other agent (2) with respect to an interaction of the at least one other agent (2) with the ego-agent (1);
   predicting future trajectories of the at least one other agent (2) including at least a first behavior of the at least one other agent (2) for a first interaction behavior with the ego-agent (1) and a second behavior of the at least one other agent (2) for a second interaction behavior of the at least one other agent (2) with the ego agent (1)
   planning ego-behaviors of the ego-agent (1) including at least a first ego-behavior for a first interaction with at least one other agent (2) and a second ego-behavior by applying a behavior planning algorithm based on the acquired sensor information and agent information;

selecting a combination of one planned ego-behavior and one corresponding predicted behavior based on a predicted interaction of the ego-agent (1) with the at least one other agent (2);
controlling operation of the ego-agent (1) based on the selected ego-behavior; and

**characterized in** further comprising:

deciding whether to output a signal to the at least one other agent (2) based on fulfilling at least one set of criteria and based on the selected combination of one planned ego-behavior and one corresponding predicted behavior;
generating the signal including information on the selected combination of one planned ego-behavior and predicted behavior; and
outputting, via an external human machine interface (17), the generated signal to the at least one other agent (2).

2. The method according to claim 1, wherein the generated signal further includes information on an uncertainty with the selected combination of one planned behavior of the ego-agent (1) and one predicted behavior of the other agent (2).

3. The method according to claim 1 or 2, wherein determining if the at least one other agent (2) has at least two behavior options for interacting with the ego-agent (1) includes determining an interaction zone (6) in the environment of the ego-agent (1) and at least one other agent (2) based on the possible paths for the ego-agent and the possible paths for the at least one other agent (2).

4. The method according to one of the preceding claims, wherein the method comprises
selecting the combination of the planned behavior of the ego-agent (1) and the predicted behavior of the at least one other agent (2) by evaluating a joint cost function that regards cost of the ego-agent (1) and the least one other agent (2).

5. The method according to one of the preceding claims, wherein the method comprises
generating, by a behavior planner (14), information on the predicted interaction and the selected combination of the one planned behavior and the associated predicted behavior and providing the generated information to a communication system (16).

6. The method according to one of the claims 1 to 4, wherein the method comprises
generating, by a behavior planner (14), semantic information on the predicted interaction based on the selected combination of the one planned behavior and the associated behavior, wherein this information may comprise information on at least one of: passing order of the agents through an interaction zone (6), velocity, acceleration and steering trajectories of the selected behaviors, and providing the generated semantic information to a communication system (16).

7. The method according to one of the preceding claims, wherein the method comprises
fulfilling the at least one set of criteria includes fulfilling a first set of criteria that includes:

at least one combination of one ego-behavior with one predicted behavior results in the at least one other agent (2) passing the interaction zone (6) before the ego-agent (1) passes the shared traffic space (6), and
executing the selected ego-behavior includes the at least one other agent (2) passing the interaction zone (6) before the ego-agent (1) passes the interaction zone (6),
at least one combination of one ego-behavior with one predicted behavior results in the at least one other agent (2) passing the interaction zone (6)after the ego-agent (1) passes the interaction zone(6); and
a difference between an ego-behavior of the ego-agent (1) included in an alternative combination of one ego-behavior with one predicted behavior different than the selected combination and the one ego-behavior of the selected combination exceeds a first threshold.

8. The method according to one of the preceding claims, wherein the method comprises
fulfilling the at least one set of criteria includes fulfilling a second set of criteria that includes

at least one combination of one ego-behavior with one predicted behavior results in the ego-agent (1) passing the interaction zone (6) before the at least one other agent (2) passes the interaction zone (6), and executing the selected behavior includes the ego-agent (1) passing the shared traffic space (6) before the at least one other agent (2) passes the interaction zone (6), and
at least one combination of one ego-behavior with one predicted behavior results in the at least one other agent (2) passing the interaction zone (6) before the ego-agent (1) passes the interaction zone (6); and
a difference between an ego-behavior included in an alternative combination of one ego-behavior with one predicted behavior different than the selected combination and the one ego-behavior of the selected combination exceeds a second threshold.

**9.** The method according to claim 7 or 8, wherein the method comprises determining the difference based on an acceleration of the ego-agent (1).

**10.** The method according to one of the preceding claims, wherein the ego-agent (1) is an automated vehicle and the at least one other agent (2) includes at least one of a pedestrian, a cyclist, a motorcyclist, and a driver in a motor vehicle.

**11.** The method according to one of the preceding claims, wherein the generated signal is at least one of an image, a symbol, a light pattern, a text message, an animated image, a sound pattern, and a voice message.

**12.** The method according to one of the preceding claims, wherein the method comprises generating, if the system determines more than one other agent (2), signals for each of them and outputting the signals by one of a plurality of human machine interfaces determined to be visible to the respective other agent (17), or outputting the signals at positions on a single human machine interface (17) in a way that is directed towards the corresponding other agent (2).

**13.** A computer program comprising machine-readable instructions executable by a digital processing apparatus, which, when the digital processing apparatus executes the computer program, cause the digital processing apparatus to perform the method according to one of claims 1 to 12.

**14.** A non-transitory computer-readable storage medium embodying a program of machine-readable instructions executable by a digital processing apparatus, which when the digital processing apparatus executes the program, cause the digital processing apparatus to perform the method according to one of claims 1 to 12.

**15.** System for assisting an ego-agent (1) in operating in a dynamic environment, wherein at least one other agent (2) is in the dynamic environment, the system comprising:

at least one sensor interface configured to acquire sensor information on the dynamic environment of the ego-agent (1) and agent information on the ego-agent (1);
a behavior planner (14) configured to plan ego-behaviors of the ego-agent (1) including at least a first ego-behavior and a second ego-behavior by applying a behavior planning algorithm based on the acquired sensor information and agent information, and
the behavior planner (14) is further configured to predict behaviors of the at least one other agent including at least a first behavior and a second behavior of the at least one other agent (2),
wherein the system is configured to determine, for the at least one other agent (2), if there are at least two different potential future behaviors of the at least one other agent (2) with respect to an interaction of the at least one other agent (2) with the ego-agent (1);
to predict future trajectories of the at least one other agent (2) including at least a first behavior of the at least one other agent (2) for a first interaction behavior with the ego-agent (1) and a second behavior of the at least one other agent (2) for a second interaction behavior of the at least one other agent (2) with the ego agent (1);
to select a combination of one planned ego-behavior and one corresponding predicted behavior based on a predicted interaction of the ego-agent (1) with the at least one other agent (2) in the shared traffic space (6); and
a controller (15) configured to control operation of the ego-agent (1) based on the selected ego-behavior; and

**characterized in** further comprising:

a communication system (16) configured to decide whether to output a signal to the at least one other agent (2) based on fulfilling at least one set of criteria and based on the selected combination of one planned ego-behavior and one corresponding predicted behavior, and
the communication system (16) is further configured to generate the signal including information on the selected combination of one planned ego-behavior and the predicted behavior, and
to control outputting, via an external human machine interface (17), the generated signal to the at least one other agent (2).

| S1 | ACQUIRING SENSOR INFORMATION ON ENVIRONMENT |
| S2 | ACQUIRING EGO-INFORMATION ON EGO-VEHICLE |

**S3** DETERMINING INTERACTION ZONE

**S4** PREDICTING BEHAVIORS OF PEDESTRIAN

**S5** PLANNING EGO-BEHAVIORS OF EGO - VEHICLE

**S6** SELECTING A COMBINATION OF ONE PLANNED EGO-BEHAVIOR AND ONE PREDICTED OTHER BEHAVIOR

**S7** CONTROLLING OPERATION OF EGO - VEHICLE

COM

**S8** DETERMINING WHETHER TO OUTPUT SIGNAL TO PEDESTRIAN

**S9** GENERATING SIGNAL TO PEDESTRIAN

**S10** OUTPUTTING GENERATED SIGNAL TO PEDESTRIAN

FIG. 1

FIG. 2

FIG. 3

FIG. 4

FIG. 5

(FROM S6)

OBTAINING SELECTED
COMBINATION — S81

FIRST CRITERION OF
FIRST SET IS MET? — S82

NO →

YES ↓

SECOND CRITERION OF
FIRST SET IS MET? — S83

NO →

YES ↓

THIRD CRITERION OF
FIRST SET IS MET — S84

NO →

YES ↓

FOURTH CRITERION OF
FIRST SET IS MET? — S85

NO →

YES ↓

DECIDING TO OUTPUT
SIGNAL TO PEDESTRIAN — S86

A

(TO S9)

FIG. 6A

(A)

FIRST CRITERION OF
SECOND SET IS MET? — S87

NO

YES

SECOND CRITERION OF
SECOND SET IS MET? — S88

NO

YES

THIRD CRITERION OF
SECOND SET IS MET? — S89

NO

YES

FOURTH CRITERION OF
SECOND SET IS MET? — S90

NO

YES

DECIDING TO OUTPUT
SIGNAL TO PEDESTRIAN — S91

END

(TO S9)

FIG. 6B

FIG. 7

Europäisches
Patentamt

European
Patent Office

Office européen
des brevets

# EUROPEAN SEARCH REPORT

**Application Number**

EP 24 20 7089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/111871 A1 (SCHMITT PAUL [US] ET AL) 14 April 2022 (2022-04-14)<br>* figures 1, 4, 11, 12, 13, 15, 17, 27, 29 *<br>* paragraph [0046] - paragraph [0050] *<br>* paragraph [0071] - paragraph [0073] *<br>* paragraph [0101] - paragraph [0104] *<br>* paragraph [0123] - paragraph [0130] *<br>* paragraph [0150] *<br>* paragraph [0156] - paragraph [0167] *<br>* paragraph [0182] *<br>* paragraph [0192] *<br>* paragraph [0268] - paragraph [0270] *<br>* paragraph [0292] - paragraph [0293] *<br>- - - - - | 1-15 | INV.<br>G08G1/00 |
| X<br>A | US 2019/043363 A1 (MORIMURA JUNICHI [JP] ET AL) 7 February 2019 (2019-02-07)<br>* paragraph [0004] *<br>* paragraph [0006] *<br>* paragraph [0016] *<br>* paragraph [0020] *<br>* paragraph [0029] - paragraph [0030] *<br>* paragraph [0033] - paragraph [0042] *<br>* figures 2-3, 5 *<br>- - - - - | 1-6, 10-15<br>7-9 | |
| X<br>A | US 2020/234569 A1 (WANG YA [CN]) 23 July 2020 (2020-07-23)<br>* figures 1-3, 5, 8 *<br>* paragraph [0055] - paragraph [0060] *<br>* paragraph [0073] *<br>* paragraph [0076] *<br>- - - - - | 1,2,4,5, 7,8, 10-15<br>3,6,9 | |

**TECHNICAL FIELDS SEARCHED (IPC)**

G08G

The present search report has been drawn up for all claims

| Place of search | Date of completion of the search | Examiner |
|---|---|---|
| The Hague | 7 March 2025 | Fernández Santiago |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................
& : member of the same patent family, corresponding document

EPO FORM 1503 03.82 (P04C01)

page 1 of 2

**EUROPEAN SEARCH REPORT**

Europäisches
Patentamt
European
Patent Office
Office européen
des brevets

Application Number

EP 24 20 7089

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WENZEL RAPHAEL ET AL: "Asymmetry-based Behavior Planning for Cooperation at Shared Traffic Spaces", 2021 IEEE INTELLIGENT VEHICLES SYMPOSIUM (IV), IEEE, 11 July 2021 (2021-07-11), pages 1008-1015, XP034005160, DOI: 10.1109/IV48863.2021.9575187 [retrieved on 2021-10-14] * the whole document * | 1-15 | |
| A | US 2022/171065 A1 (LI PEI [CN] ET AL) 2 June 2022 (2022-06-02) * paragraph [0071] - paragraph [0073] * * figures 2, 5 * | 1-15 | |
| | | | TECHNICAL FIELDS SEARCHED (IPC) |

The present search report has been drawn up for all claims

| Place of search | Date of completion of the search | Examiner |
|---|---|---|
| The Hague | 7 March 2025 | Fernández Santiago |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 20 7089

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2025

| Patent document cited in search report | Publication date | Patent family member(s) | Publication date |
|---|---|---|---|
| US 2022111871 A1 | 14-04-2022 | CN 114394110 A | 26-04-2022 |
| | | DE 102021125956 A1 | 14-04-2022 |
| | | GB 2601414 A | 01-06-2022 |
| | | GB 2616356 A | 06-09-2023 |
| | | KR 20220047532 A | 18-04-2022 |
| | | US 2022111871 A1 | 14-04-2022 |
| | | US 2023347815 A1 | 02-11-2023 |
| US 2019043363 A1 | 07-02-2019 | CN 109383367 A | 26-02-2019 |
| | | JP 6690612 B2 | 28-04-2020 |
| | | JP 2019026201 A | 21-02-2019 |
| | | US 2019043363 A1 | 07-02-2019 |
| US 2020234569 A1 | 23-07-2020 | CN 109649266 A | 19-04-2019 |
| | | US 2020234569 A1 | 23-07-2020 |
| US 2022171065 A1 | 02-06-2022 | CN 114450703 A | 06-05-2022 |
| | | US 2022171065 A1 | 02-06-2022 |
| | | WO 2021062595 A1 | 08-04-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Asymmetry-based behavior planning for cooperation at shared traffic spaces. **R. WENZEL** ; **M. PROBST** ; **T. PUPHAL** ; **T. H. WEISSWANGE** ; **J. EGGERT**. 2021 IEEE Intelligent Vehicles Symposium (IV). IEEE, 2021, 1008-1015

- Automated driving in complex real-world scenarios using a scalable risk-based behavior generation framework. **M. PROBST** ; **R. WENZEL** ; **T. PUPHAL** ; **M. KOMURO** ; **T. H. WEISSWANGE** ; **N. STEINHARDT** ; **B. BOLDER** ; **B. FLADE** ; **Y. SAKAMOTO** ; **Y. YASUI et al.** 2021 IEEE International Intelligent Transportation Systems Conference (ITSC). IEEE, 2021, 629-636